## Europäisches Patentamt
## European Patent Office
## Office européen des brevets

(11) Veröffentlichungsnummer: **0 297 173**
**A2**

# EUROPÄISCHE PATENTANMELDUNG

(21) Anmeldenummer: 87116478.6

(22) Anmeldetag: 07.11.87

(51) Int. Cl.⁴ **F16L 27/10 , B60K 15/00**

(30) Priorität: 03.07.87 DE 3722004

(43) Veröffentlichungstag der Anmeldung:
04.01.89 Patentblatt 89/01

(84) Benannte Vertragsstaaten:
DE FR GB IT

(71) Anmelder: **Firma Carl Freudenberg**
**Höhnerweg 4**
**D-6940 Weinheim/Bergstrasse(DE)**

(72) Erfinder: **Barth, Thomas Dr.**
**Rilkeweg 5**
**D-6100 Darmstadt(DE)**
Erfinder: **Fellenberg, Lutz**
**Happelstrasse 2**
**D-6900 Heidelberg(DE)**

(74) Vertreter: **Weissenfeld-Richters, Helga, Dr.**
**Höhnerweg 2**
**D-6940 Weinheim/Bergstrasse(DE)**

(54) **Kupplungsglied.**

(57) Ein zugbelastbares Kupplungsglied mit - schwingungsdämpfenden Eigenschaften, umfassend einen Hohlkörper (1) aus weichelastischem Gummi und ein damit verbundenes Verstärkungsglied aus Hartwerkstoff. Das Verstärkungsglied besteht aus zwei im Bereich der Enden des Hohlkörpers (1) angeordneten Anschlußhülsen (2,3) sowie aus wenigstens zwei gleichmäßig auf dem Umfang des Kupplungsgliedes verteilten Zugfedern (4), welche die Anschlußhülsen (2, 3) verbinden.

EP 0 297 173 A2

## Kupplungsglied

Die Erfindung betrifft ein Kupplungsglied nach dem Oberbegriff von Anspruch 1.

Ein solches Kupplungsglied ist bekannt. Es dient der Aufhängung einer Kraftstoffpumpe im Inneren des Tanks von Kraftfahrzeugen. Dabei wurde insbesondere nach längerer Verwendung eine störende Übertragung von pumpenerregten Schwingungen auf die Wandungen des Tanks beobachtet, was wenig befriedigend ist. Die Aufgabe der vorliegenden Erfindung wird demgegenüber darin gesehen, ein solches Kupplungsglied derart weiter zu entwickeln, daß auch bei langfristigem Gebrauch eine störende Übertragung von pumpenerregten Schwingungen auf die Wandungen des Tanks mit Sicherheit ausgeschlossen ist. Diese Aufgabe wird erfindungsgemäß mit den kennzeichnenden Merkmalen von Anspruch 1 gelöst. Auf vorteilhafte Ausgestaltungen nehmen die Unteransprüche bezug.

Bei dem erfindungsgemäßen Kupplungsglied weist das Verstärkungsglied zwei im Bereich der Enden des Hohlkörpers angeordnete Anschlußhülsen aus einem Hartwerkstoff auf, die durch wenigstens zwei gleichmäßig auf dem Umfang verteilte Zugfedern senkrecht übereinanderliegend verbunden sind. Die Zugfedern bestehen ebenfalls aus einem Hartwerkstoff, beispielsweise aus Polyamid. Stahl, Messing oder Aluminium. Sie vermögen die insgesamt aufzunehmende, statische Last selbständig abzutragen, wobei wegen der Verwendung von Hartwerkstoffen zu ihrer Herstellung auch im langfristigen Gebrauch keine störenden maßlichen Veränderungen oder Relaxationserscheinungen zu beobachten sind. Auch ist es wegen des geringen Gewichtes der üblicherweise zur Anwendung gelangenden Kraftstoffpumpen völlig ausreichend, den Zugfedern einen äußerst geringen Querschnitt zu geben und sie beispielsweise in Gestalt eines säulenförmigen Streifens zu erzeugen, der sich, in Umfangsrichtung betrachtet, im wesentlichen parallel zu dem Kupplungsglied erstrecken kann.

Um hierbei die notwendige Nachgiebigkeit zu erhalten, kann der Streifen an wenigstens einer Stelle seiner axialen Länge mit einer Einfältelung und/oder einer Einwölbung versehen sein. Die Tiefe. gemessen senkrecht zur Erstreckung des Kupplungsgliedes, einer entsprechenden Einfältelung oder Einwölbung braucht dabei nur relativ gering zu sein, weil die gebräuchlichen Kraftstoffpumpen wegen der hohen Drehzahl der zugehörigen Motoren nur zu Schwingungen angeregt werden, die neben einer hohen Frequenz durch eine äußerst geringe Amplitude gekennzeichnet sind. Im Regelfalle genügt die Verwendung einer einzigen Einfältelung bzw. Einwölbung, die in diesem Falle allerdings in axialer Richtung nahezu die gesamte Länge der Zugfeder überbrücken sollte. Bei einer entsprechenden Ausbildung ergibt sich der sekundäre Vorteil, daß scharfkantige Einknickungen der Zugfedern nicht vorhanden sind. Die Dauerhaltbarkeit wird dadurch auch bei Anwendung äußerst geringer Profilquerschnitte der Streifen deutlich erhöht. Sie vermögen bei einer entsprechenden Ausbildung leichter zu federn und bewirken als Folge hiervon eine bessere Isolierung der von der Kraftstoffpumpe ausgehenden Schwingungen. Eine schraubenförmige Wendelung des Streifens ist ebenfalls möglich. Sie kann den Hohlkörper zumindest teilweise in Umfangsrichtung umschlingen.

Die Einfältelungen und/oder Einwölbungen sind bevorzugt spiegelbildlich zur Mitte des Kupplungsgliedes ausgerichtet, wodurch sich dieses in seiner Gesamtheit nach außen hin neutral verhält. Das Betriebsverhalten beeinträchtigende Deformieren des Kupplungsgliedes können daher auch bei extremen Belastungssituationen nicht mehr auftreten.

Die Zugfedern können auf ihrer gesamten Länge mit der Wandung des Hohlkörpers aus weichelastischem Gummi verbunden sein. Sie erfahren dadurch in ihrer Beweglichkeit eine hochgradige Dämpfung, was auch das Auftreten von Resonanzschwingungen völlig ausschließt.

Eine verbesserte Isolierung der Schwingung ergibt sich demgegenüber, wenn die Federn frei beweglich außerhalb des Hohlkörpers angeordnet sind. Für die gebräuchlichen Anwendungsfälle hat es sich bewährt, wenn die beiden Anschlußhülsen nur durch zwei einander in Umfangsrichtung des Kupplungsgliedes gegenüberliegende Zugfedern verbunden sind. Diese können einstückig mit den Anschlußhülsen ausgebildet sein und beispielsweise mit den Anschlußhülsen gemeinsam ein in sich geschlossenes Formteil aus Kunststoff bilden. Die Herstellung wird dadurch deutlich vereinfacht. Eine vollständige Einbettung in die Wandung des Hohlkörpers hat sich in bestimmten Fällen als vorteilhaft bewährt. Hierdurch wird der Zutritt und damit die Einwirkung von Kraftstoff auf das Verstärkungsglied verhindert, wodurch auch die Verwendung von kraftstoffsensiblen, polymeren Werkstoffen für dessen Erzeugung in die Überlegungen mit einbezogen werden kann.

Eine beispielhafte Ausführung des erfindungsgemäßen Kupplungsgliedes ist in der als Anlage beigefügten Zeichnung dargestellt. Die äußeren und inneren Konturen des Hohlkörpers 1 sind dabei gestrichelt dargestellt, diejenigen des Verstärkungsgliedes in Form von durchgehenden Linien.

Der Hohlkörper besteht aus weichelastischem Gummi einer Härte Shore A von etwa 60. Er weist eine rotationssymmetrisch ausgebildete Wandung auf, die etwa im mittleren Bereich der axialen Erstreckung einwärts eingewölbt ist. Der Hohlkörper ist dadurch in axialer Richtung elastisch nachgiebig.

An den beiden axialen Enden ist der Hohlkörper mit Anschlußmanschetten versehen, die im wesentlichen von hohlzylindrischer Gestalt sind. Sie dienen dem flüssigkeitsdichten Anschluß einerseits der Kraftstoffleitung und andererseits der Kraftstoffpumpe.

In die Wandung des Hohlkörpers 1 ist ein einstückiges Verstärkungsglied aus Kunststoff eingebettet. Dieses weist im Bereich der beiden Anschlußmanschetten des Hohlkörpers die hohlzylindrischen Anschlußhülsen 2 und 3 auf, welche in Längsrichtung mit Ausnehmungen versehen sind. Bei Verwendung von Kunststoff kann sich die Anbringung gegebenenfalls erübrigen. Durch die Aufbringung eines Schlauchbinders auf den Außenumfang der Anschlußmanschetten ist dadurch eine Durchmesserreduzierung möglich, und somit die Erlangung eines mechanisch festen Sitzes auf den Anschlußstutzen einerseits der Kraftstoffleitung und andererseits der Kraftstoffpumpe.

Die Anschlußhülsen sind an den einander zugewandten Enden mit nach außen vorspringenden Ringflanschen versehen, die dem Anschluß der Zugfedern 4 dienen. Letztere bestehen aus zwei einander gegenüberliegende, säulenförmige Streifen, welche einstückig mit den übrigen Teilen des Verstärkungsgliedes ausgebildet sind. Sie haben nur einen sehr geringen Querschnitt und sind in spiegelbildlicher Weise auf nahezu ihrer gesamten Länge eingewölbt, wodurch das Kupplungsglied in Längsrichtung eine gewisse Elastizität erhält. Diese ist ausreichend in bezug auf die Isolierung des hochfrequenten Schwingungen niedriger Amplitude, welche von der gebräuchlichen Kraftstoffpumpen ausgehen. Die störenden Schwingungen können daher nicht mehr in nachteiliger Weise auf die Wandung des zugehörigen Kraftstofftankes übertragen werden und hierin gegebenenfalls eine Verstärkung erfahren.

Das Kupplungsglied ist von ausgezeichneter Dauerhaltbarkeit. Es weist auch nach sehr langer Gebrauchsdauer keine nennenswerte Veränderung seiner schwingungsisolierenden und - schwingungsdämpfenden Eigenschaften auf.

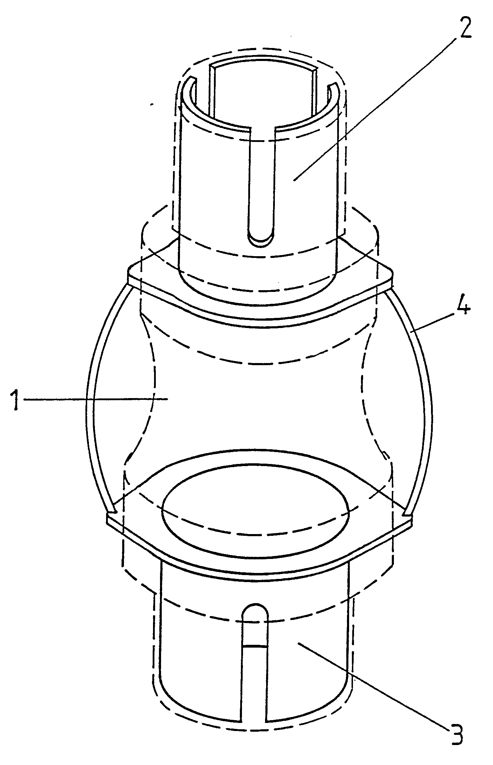

**Ansprüche**

1. Zugbelastbares Kupplungsglied mit - schwingungsdämpfenden Eigenschaften, umfassend einen Hohlkörper aus weichelastischem Gummi und ein damit verbundenes Verstärkungsglied aus einem Hartwerkstoff, dadurch gekennzeichnet, daß das Verstärkungsglied zwei im Bereich der Enden des Hohlkörpers angeordnete Anschlußhülsen (2, 3) umfaßt sowie wenigstens zwei gleichmäßig auf dem Umfang verteilte Zugfedern (4), die die Anschlußhülsen (2, 3) verbinden.

2. Kupplungsglied nach Anspruch 1, dadurch gekennzeichnet, daß die Zugfedern (4) aus säulenförmigen Streifen bestehen und sich, in Umfangsrichtung betrachtet, im wesentlichen parallel zu dem Kupplungsglied erstrecken.

3. Kupplungsglied nach Anspruch 1 bis 2, dadurch gekennzeichnet, daß die Streifen an wenigstens einer Stelle ihrer axialen Länge mit einer Einfädelung und/oder einer Einwölbung versehen sind.

4. Kupplungsglied nach Anspruch 3, dadurch gekennzeichnet, daß die Einfädelung und/oder Einwölbung radial zur Mitte des Kupplungsgliedes ausgerichtet ist.

5. Kupplungsglied nach Anspruch 4, dadurch gekennzeichnet, daß nur eine Einfädelung und/oder Einwölbung in einem jeden Streifen vorgesehen und im wesentlichen im mittleren Bereich der axialen Erstreckung angeordnet ist.

6. Kupplungsglied nach Anspruch 1 bis 5, dadurch gekennzeichnet, daß die Zugfedern (4) und die Anschlußhülsen (2, 3) einstückig ausgebildet sind.

7. Kupplungsglied nach Anspruch 1 bis 6, dadurch gekennzeichnet, daß die Anschlußhülsen und die Zugfedern in die Wandung des Hohlkörpers (1) eingebettet sind.